# EUROPÄISCHE PATENTSCHRIFT

(11) **EP 0 838 207 B1**
(45) Veröffentlichungstag und Bekanntmachung des Hinweises auf die Patenterteilung: **18.12.2002**
(21) Anmeldenummer: 97117778.7
(22) Anmeldetag: 14.10.1997
(51) Int. Cl.: A61G 15/02, G01B 3/56, G01B 7/34, G01D 5/165

(54) **Vorrichtung zur Erkennung der Relativlage und zur Begrenzung des Verstellweges von zwei relativ zueinander um eine Schwenkachse verstellbaren Objektteilen einer zahnärztlichen Einrichtung**
Device for determining the relative position and for limiting the operation range of the relative adjustment around a rotation axis of two parts of a dental unit
Dispositif pour déterminer la position relative et pour limiter la course de réglage relative autour d'un axe de rotation l'une par rapport à l'autre de deux pièces d'un dispositif dentaire

(30) Priorität: 28.10.1996 DE 19644766
(43) Veröffentlichungstag der Anmeldung: 29.04.1998
(73) Patentinhaber: Sirona Dental Systems GmbH, 64625 Bensheim (DE)
(72) Erfinder: Moritz, Guenther, 68623 Lampertheim (DE)
(74) Vertreter: Sommer, Peter

(56) Entgegenhaltungen:
- DE-A- 1 908 059
- DE-A- 2 147 728
- US-A- 3 984 146

## Beschreibung

In der Dentaltechnik gibt es eine Reihe von Anwendungsfällen, bei denen die Relativlage von zwei zueinander verschwenkbaren Objektteilen erkannt und der Verstellweg dieser beiden Objektteile begrenzt werden muß. Bei einem zahnärztlichen Patientenstuhl beispielsweise hat man mehrere solcher zu verstellender Objektteile. Um unterschiedliche Patienten in unterschiedliche Behandlungspositionen bringen zu können, gilt es, nicht nur das Stuhloberteil relativ zum Stuhlunterteil in der Höhe zu verstellen, sondern auch die Neigung von Sitz und Rückenlehne sowie die Neigung von Kopfauflage zu Rückenlehne zu verändern. Auch bei zahnärztlichen Behandlungsgeräten gibt es mehrere solcher Anwendungsfälle; beispielsweise bei Verstellung eines an einem Tragarm angelenkten Instrumententrägerkopfes.

Nachdem man die Verstellungen heute vorwiegend unter Zuhilfenahme elektronischer Steuereinrichtungen vornimmt, bei denen die einzelnen Stuhlpositionen durch Programme festgelegt sind die der Behandler bei Bedarf aufrufen kann, bedarf es einer Erkennung der Relativlage und auch einer Begrenzung des Verstellweges der zu verstellenden Teile.

Eine entsprechende Vorrichtung ist in US-A-3 984 146 offenbart.

Der im Anspruch 1 angegebenen Erfindung liegt die Aufgabe zugrunde, eine vergleichsweise einfach herzustellende und platzsparend unterzubringende Vorrichtung der eingangs genannten Gattung zu schaffen, die sich relativ leicht unterschiedlichen Anwendungsfällen und Verstellbereichen anpassen läßt.

Nachfolgend wird ein Ausführungsbeispiel anhand der Zeichnung näher erläutert.

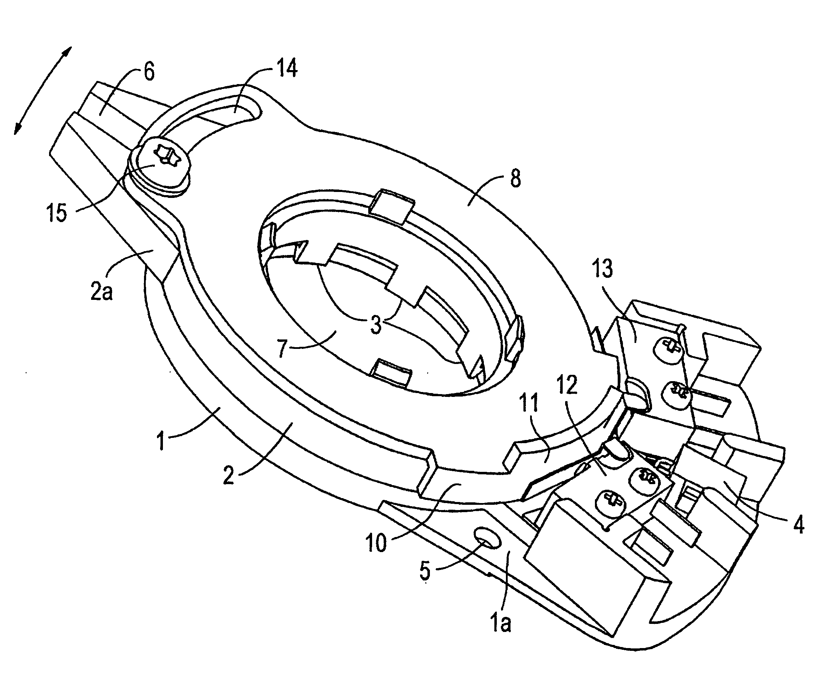

Die Figur 1 zeigt die erfindungsgemäße Vorrichtung in einer schaubildlichen Darstellung.

Zwei relativ dünne, im wesentlichen ringförmig ausgebildete Platten 1, 2 sind sandwichartig übereinander angeordnet und in nicht dargestellten Führungen so geführt, daß sie sich relativ zueinander in der angegebenen Pfeilrichtung um ihre Zentrumsachse verdrehen lassen. Mehrere am Umfang angeordnete Klammern 3 halten die Platten zusammen. An den einander zugekehrten Innenflächen bilden die beiden Teile ein Ringpotentiometer, indem die eine Platte (1 oder 2) mit einer Widerstandsbahn und die andere mit ein oder mehreren, mit dieser zusammenwirkenden Schleifkontakten versehen ist. Die Anschlußleitungen sind zu einem Anschlußstecker 4 geführt, der an einem Fortsatz 1a der ringförmigen Platte 1 befestigt ist. Der Fortsatz 1a enthält beidseitig Bohrungen 5 für eine Befestigung an dem einen der zu verstellenden Objektteile. Ein ander Fortsatz 2a an der zweiten ringförmigen Platte 2 enthält eine Aussparung 6, die mit einem dort eingreifenden, hier nicht dargestellten, Mitnehmer zusammenwirkt. Dieser ist am anderen Objektteil befestigt. Die durch die Ringform gebildete zentrische Öffnung 7 ist der Schwenkachse der zu verstellenden Objektteile so angepaßt, daß sie direkt dort aufgesetzt werden kann.

Auf der ringförmigen Platte 2 ist ein Schaltring in Form einer dünnen Scheibe 8 aufgesetzt. Die Scheibe enthält zwei Schaltnocken 10, 11 mit unterschiedlich langen peripheren Schaltbahnen. Im montierten Zustand, wie dargestellt, wirkt die die Schaltbahn der unteren Schaltnocke 10 mit den Kontaktfahnen von zwei am Abschnitt 1a befestigten Mikroschaltern 12, 13 zusammen. Die Mikroschalter sind als Endschalter gedacht und begrenzen den Verstellweg der beiden zu verstellenden Objektteile.

Die obere Schaltnocke 11 hat in der hier dargestellten Anordnung keine Funktion; sie erfüllt sie erst dann, wenn die Scheibe 8 gewendet montiert wird. In dieser Position wirkt dann die Schaltbahn dieser Schaltnocke mit den Mikroschaltern zusammen. Die vorgestellte Bauform eröffnet die Möglichkeit, gleiche Bauteile auch für andere Verstellwege, z.B. bei anderen Objektteilen einzusetzen.

Für eine Justierung der Schaltpunkte ist die Scheibe 8 verstellbar an der Platte 2 befestigt. Im vorliegenden Ausführungsbeispiel ist hierzu eine Langlochführung 14 vogesehen. Die Feststellung erfolgt durch eine Stellschraube 15.

Im vorliegenden Ausführungsbeispiel sind die beiden Schaltnocken 10, 11 integraler Bestandteil der Scheibe 8 und begrenzen einen Ausschnitt (Sektor) eines Kreises. Es liegt selbstverständlich im Rahmen der Erfindung, die Schaltnocken auch anders zu gestalten. Alternativ zu der vorgestellten Version ist es auch denkbar, die Schaltnocken selbst auf der Scheibe verstellbar anzuordnen. Eine weitere vorteilhafte Justierung der Schaltpunkte läßt sich erzielen, wenn man die Mikroschalter 12 verstellbar an der Platte 1 anordnet. Dies könnte beispielsweise durch eine Befestigung in einer Langlochführung, wie anhand der Positionen 14/15 gezeigt, geschehen.

Wie eingangs bereits angesprochen, kann die Vorrichtung in bevorzugter Anwendung bei einem zahnärztlichen Patientenstuhl eingesetzt werden, und zwar dort, wo man die Vorrichtung direkt auf die Lagerachse der zu verstellenden Objektteile aufsetzen kann. Am Beispiel der Verstellung von Sitz und Rückenlehne kann man die Vorrichtung auf das Verbindungsgelenk zwischen Sitz und Rückenlehne platzsparend aufsetzen und in der beschrieben Weise befestigen. Eine entsprechende Anordnung der Vorrichtung an einem Verbindungsgelenk (Dreh- oder Kippgelenk) ist mit Vorteil auch bei einem zahnärztlichen Behandlungsgerät denkbar.

## Patentansprüche

1. Vorrichtung zur Erkennung der Relativlage und zur Begrenzung des Verstellweges von zwei relativ zueinander um eine Schwenkachse verstellbaren Objektteilen einer zahnärztlichen Einrichtung, **gekennzeichnet durch** ein Ringpotentiometer, welches wenigstens zwei sandwichartig übereinander angeordnete ringförmige Trägerelemente (1, 2) mit einer zentrischen Öffnung, ausgebildet zur Aufnahme des Schwenkachse des Objektteile, aufweist, von denen das eine Trägerelement (1 oder 2) am einen Objektteil befestigbar ist und eine Widerstandsbahn enthält, und das andere am anderen Objektteil befestigbar ist und mit der Widerstandsbahn zusammenwirkende Schleifkontakte zur Erkennung der Relativlage enthält, und von denen das eine mindestens eine Schaltnocke (10, 11) aufweist, welche mit mindestens einem am anderen Trägerelement (2 oder 1) korrespondierend dazu angeordneten Schaltelement (12, 13) zusammenwirkt.

2. Vorrichtung nach Anspruch 1, **dadurch gekennzeichnet, daß** zum Zwecke einer Änderung des Schaltpunktes die Schaltnocke (10, 11) verstellbar auf dem Trägerelement (2) angeordnet ist.

3. Vorrichtung nach Anspruch 2, **dadurch gekennzeichnet, daß** die Schaltnocke (10, 11) auf einem auf dem Trägerelement (2) verstellbar aufgesetzten Schaltring (8) angeordnet ist.

4. Vorrichtung nach Anspruch 3, **dadurch gekennzeichnet, daß** der Schaltring (8) zumindest eine Schaltnocke (10, 11) mit peripher angeordneter, einen Ausschnitt (Sektor) eines Kreises bildender Schaltbahn aufweist, die mit zwei am anderen Trägerelement korrespondierend dazu angeordneten Mikroschaltern (12, 13) zusammenwirkt.

5. Vorrichtung nach Anspruch 4, **dadurch gekennzeichnet, daß** der Schaltring (8) zwei Schaltnocken (10, 11) mit unterschiedlich langer Schaltbahn aufweist.

6. Vorrichtung nach Anspruch 5, **dadurch gekennzeichnet, daß** die beiden Schaltbahnen unmittelbar ober- und unterhalb der Ebene in der der Schaltring (8) liegt, angeordnet sind.

7. Vorrichtung nach einem der Ansprüche 3 bis 6, **dadurch gekennzeichnet, daß** die Schaltnocken (10, 11) integraler Bestandteil des Schaltringes (8) sind.

## Claims

1. Device for detecting the relative position and for limitating the adjusting path of two object parts, adjustable relative to one another about a pivoting axis, of a dental appliance, **characterized by** a single-turn potentiometer which has at least two annular support elements (1, 2), arranged one above the other like a sandwich, with a central opening constructed for holding the pivoting axis of the object parts, of which one support element (1 or 2) can be fastened on an object part and includes a resistance track, and the other can be fastened on the other object part and includes sliding contacts, co-operating with the resistance track, for detecting the relative position, and of which one has at least one operating cam (10, 11) which cooperates with at least one switching element (12, 13) arranged on the other support element (2, 1) correspondingly thereto.

2. Device according to Claim 1, **characterized in that** the operating cam (10, 11) is arranged adjustably on the support element (2) for the purpose of changing the operating point.

3. Device according to Claim 2, **characterized in that** the operating cam (10, 11) is arranged on a switching ring (8) adjustably mounted on the support element (2).

4. Device according to Claim 3, **characterized in that** the switching ring (8) has at least one operating cam (10, 11) with a peripherally arranged switching track, forming a section (sector) of a circle, which cooperates with two microswitches (12, 13) arranged on the other support element in a fashion corresponding thereto.

5. Device according to Claim 4, **characterized in that** the switching ring (8) has two operating cams (10, 11) with switching tracks of different length.

6. Device according to Claim 5, **characterized in that** the two switching tracks are arranged immediately above and below the plane in which the switching ring (8) lies.

7. Device according to one of Claims 3 to 6, **characterized in that** the operating cams (10, 11) are an integral component of the switching ring (8).

## Revendications

1. Dispositif pour déterminer la position relative et pour limiter la course de réglage de deux parties d'un équipement dentaire qui peuvent être réglées l'une par rapport à l'autre autour d'un axe de pivotement, **caractérisé par** un potentiomètre annulaire qui comporte au moins deux éléments (1, 2) porteurs annulaires disposés en sandwich l'un au-dessus de l'autre et dotés d'une ouverture centrale conçue pour recevoir l'axe de pivotement des parties d'équipement, l'un (1ou 2) des éléments porteurs pouvant être fixé sur une partie d'équipement et comportant une piste de résistance, et l'autre élément porteur pouvant être fixé sur l'autre partie d'équipement et comportant des contacts frottants coopérant avec la piste de résistance afin de déterminer la position relative, et l'un des éléments porteurs comportant au moins une came (10, 11) de commutation qui coopère avec au moins un élément (12, 13) de commutation disposé en correspondance sur l'autre (2 ou 1) élément porteur.

2. Dispositif suivant la revendication 1, **caractérisé en ce qu'**afin de modifier le point de commutation, la came (10, 11) de commutation est disposée avec possibilité de réglage sur l'élément (2) porteur.

3. Dispositif suivant la revendication 2, **caractérisé en ce que** la came (10, 11) de commutation est disposée sur une bague (8) de commutation montée avec possibilité de réglage sur l'élément (2) porteur.

4. Dispositif suivant la revendication 3, **caractérisé en ce que** la bague (8) de commutation comporte au moins une came (10, 11) de commutation dotée d'une piste de commutation disposée périphériquement et formant un segment (secteur) de cercle, qui coopère avec deux commutateurs (12, 13) miniatures disposés en correspondance sur l'autre élément porteur.

5. Dispositif suivant la revendication 4, **caractérisé en ce que** la bague (8) de commutation comporte deux cames (10, 11) de commutation ayant des pistes de commutation de longueurs différentes.

6. Dispositif suivant la revendication 5, **caractérisé en ce que** les deux pistes de commutation sont disposées juste au-dessus et en dessous du plan dans lequel se situe la bague (8) de commutation.

7. Dispositif suivant l'une des revendications 3 à 6, **caractérisé en ce que** les cames (10, 11) de commutation font partie intégrante de la bague (8) de commutation.
